# EUROPÄISCHE PATENTANMELDUNG

(11) **EP 2 409 899 A1**
(43) Veröffentlichungstag der Anmeldung: **25.01.2012**
(21) Anmeldenummer: 10007700.7
(22) Anmeldetag: 23.07.2010
(51) Int. Cl.: B62D 25/06, B62D 29/04

(54) **Abdeckelement für Fahrzeugaufbauten**

(71) Anmelder: AluTeam Fahrzeugtechnik GmbH, 33649 Bielefeld (DE)
(72) Erfinder: Schneider, Thomas, 33647 Bielefeld (DE)
(74) Vertreter: Schober, Mirko

(57) **Zusammenfassung**

Ein Abdeckelement (1) für Fahrzeugaufbauten, insbesondere ein Dachelement, weist mindestens einen im Wesentlichen lichtundurchlässigen Bereich (2, 3) und wenigstens einen lichtdurchlässigen Bereich (4) auf. Das Paneelelement (1) ist aus einer lichtdurchlässigen Kunststoffbahn gebildet und im lichtundurchlässigen Bereich (2, 3) mit einem Farbstoff (2a, 3a) eingefärbt. Das Paneelelement (1) kann auch wenigstens eine eingefärbte Schicht aufweisen.

## Beschreibung

Die Erfindung betrifft ein Abdeckelement nach dem Oberbegriff des Anspruchs 1.

Entsprechende Abdeckelemente bilden in der Regel das Dach für Fahrzeugaufbauten aus. Normalerweise ist bei Fahrzeugaufbauten vorgesehen, dass das Dach ein Fenster vorgegebener Größe aufweist, damit in das Innere des Aufbaus ausreichend Licht einfallen kann. Hierzu werden in das Dach in der Regel Dachfenster eingebracht, die mit dem übrigen Dach verbunden werden müssen. Durch die Verwendung unterschiedlicher Werkstoffe entstehen im Verbindungsbereich Fugen zwischen Dach und Fenster, was langfristig immer eine Problemstelle schafft, da es zu Undichtigkeiten im Dach kommen kann.

Es ist daher die Aufgabe der vorliegenden Erfindung, ein Abdeckelement, insbesondere ein Dachelement, der eingangs genannten Art anzugeben, bei welchem diese Nachteile nicht auftreten.

Gelöst wird diese Aufgabe durch ein Abdeckelement mit den Merkmalen des Anspruchs 1. Vorteilhafte Ausführungsformen finden sich in den abhängigen Ansprüchen.

Erfindungsgemäß ist ein Abdeckelement für Fahrzeugaufbauten vorgesehen, welches mit einem im Wesentlichen lichtundurchlässigen Bereich und wenigstens einem lichtdurchlässigen Bereich ausgebildet ist. Das Abdeckelement ist dabei aus einer lichtdurchlässigen Kunststoffbahn gebildet, bei der es sich zum Beispiel um einen Faserverbundwerkstoff oder ein ggf. beschichtetes Gewebe handeln kann. Der lichtundurchlässige Bereich ist dabei dadurch gebildet, dass die an und für sich lichtdurchlässige Kunststoffbahn zur Ausbildung des wenigstens einen lichtundurchlässigen Bereiches mit einem Farbstoff eingefärbt ist. Bevorzugt ist der Faserverbundwerkstoff ein durch Glasfaser verstärktes Kunststoffmaterial, sog. GFK. Der lichtundurchlässige Bereich kann zudem einen UV-Absorber enthalten, wodurch zusätzliche Funktionen in das Abdeckelement eingebracht werden können. Dies kann je nach Ladung in einem mit dem Abdeckelement bestückten Fahrzeugaufbau vorteilhaft sein, da die Ladung unter Umständen gegenüber UV-Strahlung besonders anfällig sein kann. Ebenso kann nach einer vorteilhaften Ausführungsform eine Mehrzahl lichtdurchlässiger Bereiche vorgesehen sein, um den Lichteinfall noch gezielter in den Innenraum eines Fahrzeugaufbaus einzubringen. Das bevorzugt etwa vier- oder rechteckige Abdeckelement kann weiter als einstückiges Paneel für Fahrzeugaufbauten ausgebildet werden, da es dann aus einem Material mit integriertem Fenster besteht und keine Fugen zwischen Fenster und den übrigen Bereichen des Abdeckelementes mehr entstehen. Im Dachbereich eines Fahrzeugaufbaus bietet sich hier insbesondere die Verwendung eines teilweise eingefärbten Glasfaserverbundwerkstoffes an.

Die Erfindung wird nun anhand des Ausführungsbeispiels in den Figuren 1 bis 2B schematisch näher erläutert.
- Figur 1: - zeigt eine Ausführungsform eines erfindungsgemäßen Abdeckelementes in Draufsicht,
- Figur 2A: - zeigt eine Schnittansicht durch die Ausführungsform aus Figur 1 in einer ersten Variante,
- Figur 2B: - zeigt eine Schnittansicht durch die Ausführungsform aus Figur 1 in einer zweiten Variante.

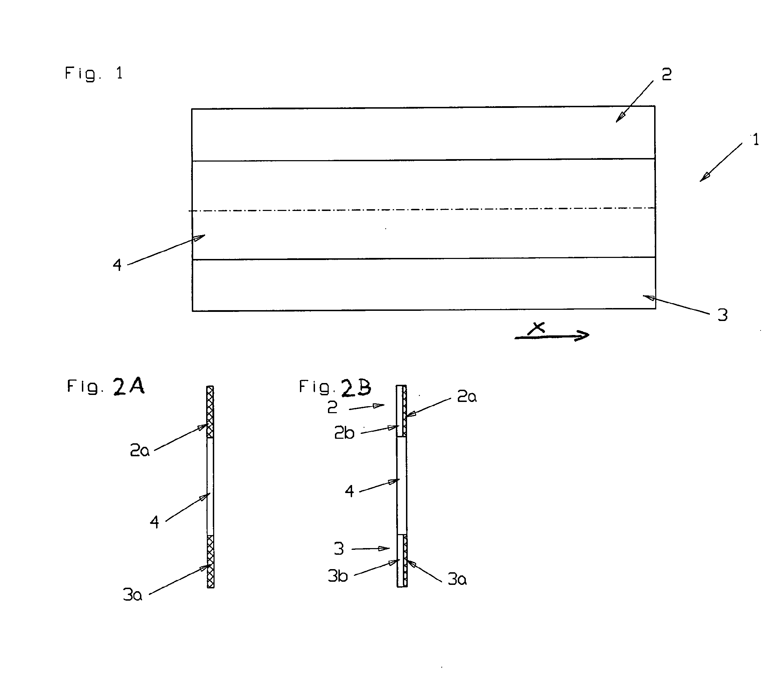

In der Figur 1 ist das erfindungsgemäße Abdeckelement 1 als rechteckiges Element dargestellt, welches beispielsweise aus einen transparenten GFK-Material oder einem beschichteten Gewebe nach Art einer Plane hergestellt ist. Im gezeigten Beispiel ist ein lichtdurchlässiger Mittelbereich 4 vorgesehen, welcher sich hier über die gesamte Länge des Abdeckelements 1 erstreckt. Genauso können ein oder eine Mehrzahl transparenter bzw. lichtdurchlässiger Bereiche vorgesehen sein, welche sowohl in Längsrichtung X des Abdeckelementes bzw. der Kunststoffbahn als auch quer dazu verlaufen können. Längsrichtung X ist die Richtung der größten räumlichen Ausdehnung der Kunststoffbahn, falls diese rechteckig ist. Längsrichtung kann auch die Fahrtrichtung des Fahrzeugs sein, falls die Kunststoffbahn bzw. das Abdeckelement als Teil eines Fahrzeugaufbaus verwendet werden. Zudem ist wenigstens ein lichtundurchlässiger Bereich 2, 3 vorgesehen, welcher aus einem eingefärbten Material gebildet ist. Bevorzugt ist das Abdeckelement 1 wie gezeigt symmetrisch aufgebaut, mit einem lichtdurchlässigen Streifen 4 in der Mitte und zwei lichtundurchlässigen Streifen an den jeweiligen Seiten.

In Figur 2A ist eine erste Variante des Abdeckelements 1 im Querschnitt dargestellt. Man erkennt hier einerseits den lichtdurchlässigen Bereich 4, und die beiden lichtundurchlässigen Bereiche 2a, 3a. Bei der dargestellten Variante sind die Bereiche 2a und 3a durch Durchfärben der das Abdeckelement 1 bildenden transparenten Kunststoffbahn gebildet.

Als Variante dazu muss die transparente Kunststoffbahn im Bereich, in welchen das fertige Abdeckelement lichtundurchlässig sein soll nicht vollständig durchgefärbt sein, sondern es kann auch eine teilweise Einfärbung erfolgen, wie dies in der Figur 2B dargestellt ist. In den Bereichen 2 und 3 erkennt man nicht eingefärbte Abschnitte 2b, 3b sowie zugehörige, darüber liegende gefärbte Abschnitte oder Schichten 2a, 3a. Diese Abschnitte 2a, 3a lassen sich durch oberflächliches oder teilweises Einfärben der Abschnitte 2, 3 oder durch Beschichten der transparenten Kunststoffbahn in den Bereichen 2, 3 mittels eines lichtundurchlässigen Beschichtungsmaterials herstellen.

Auf diese Weise kann ein fugenloses, den individuellen Anforderungen entsprechendes und beständiges Abdeckelement hergestellt werden.

## Patentansprüche

1. Abdeckelement (1) für Fahrzeugaufbauten, insbesondere Dachelement, mit mindestens einem im Wesentlichen lichtundurchlässigen Bereich (2, 3) und wenigstens einem lichtdurchlässigen Bereich (4),
**dadurch gekennzeichnet,**
**dass** das Paneelelement (1) aus einer lichtdurchlässigen Kunststoffbahn gebildet und im lichtundurchlässigen Bereich (2, 3) mit einem Farbstoff (2a, 3a) eingefärbt ist und/oder wenigstens eine eingefärbte Schicht aufweist.

2. Abdeckelement (1) nach Anspruch 1,
**dadurch gekennzeichnet,**
**dass** die Kunststoffbahn aus Faserverbundwerkstoff oder einem beschichteten Gewebe besteht.

3. Abdeckelement (1) nach Anspruch 2,
**dadurch gekennzeichnet,**
**dass** der Faserverbundwerkstoff ein durch Glasfaser verstärktes Kunststoffmaterial ist.

4. Abdeckelement (1) nach Anspruch 1, 2 oder 3,
**dadurch gekennzeichnet,**
**dass** wenigstens der lichtundurchlässige Bereich (2, 3) einen UV-Absorber enthält.

5. Abdeckelement (1) nach einem der vorherigen Ansprüche,
**dadurch gekennzeichnet,**
**dass** eine Mehrzahl lichtdurchlässige Bereiche (4) vorgesehen ist.

6. Abdeckelement (1) nach einem der vorherigen Ansprüche,
**dadurch gekennzeichnet,**
**dass** es eine im Wesentlichen rechteckige Form aufweist.

7. Abdeckelement nach einem der vorherigen Ansprüche,
**dadurch gekennzeichnet,**
**dass** der lichtdurchlässige Bereich (4) quer zur oder entlang der Richtung (X) der Längserstreckung der Kunststoffbahn verläuft.

8. Verwendung eines teilweise eingefärbten Glasfaserverbundwerkstoffes als Dach oder Dachelement für einen Fahrzeugaufbau.

## Geänderte Patentansprüche

### Geänderte Patentansprüche gemäss Regel 137(2) EPÜ.

**1.** Abdeckelement (1) für Fahrzeugaufbauten, insbesondere Dachelement, mit mindestens einem im Wesentlichen lichtundurchlässigen Bereich (2, 3) und wenigstens einem lichtdurchlässigen Bereich (4), aus einer lichtdurchlässigen Kunststoffbahn
**dadurch gekennzeichnet,**
**dass** die Kunststoffbahn aus glasfaserverstärktem Kunststoffmaterial besteht, wobei das glasfaserverstärkte Kunststoffmaterial im lichtundurchlässigen Bereich (2, 3) der Kunststoffbahn mit einem Farbstoff (2a, 3a) eingefärbt ist.

**2.** Abdeckelement (1) nach Anspruch 1,
**dadurch gekennzeichnet,**
**dass** wenigstens der lichtundurchlässige Bereich (2, 3) einen UV-Absorber enthält.

**3.** Abdeckelement (1) nach einem der vorherigen Ansprüche,
**dadurch gekennzeichnet,**
**dass** eine Mehrzahl lichtdurchlässige Bereiche (4) vorgesehen ist.

**4.** Abdeckelement (1) nach einem der vorherigen Ansprüche,
**dadurch gekennzeichnet,**
**dass** es eine im Wesentlichen rechteckige Form aufweist.

**5.** Abdeckelement nach einem der vorherigen Ansprüche,
**dadurch gekennzeichnet,**
**dass** der lichtdurchlässige Bereich (4) quer zur oder entlang der Richtung (X) der Längserstreckung der Kunststoffbahn verläuft.

**6.** Verwendung eines teilweise eingefärbten Glasfaserverbundwerkstoffes als Dach oder Dachelement für einen Fahrzeugaufbau.
